(19) Europäisches Patentamt
European Patent Office
Office européen des brevets

(11) **EP 1 623 901 B1**

(12) **EUROPÄISCHE PATENTSCHRIFT**

(45) Veröffentlichungstag und Bekanntmachung des Hinweises auf die Patenterteilung:
**26.03.2008  Patentblatt 2008/13**

(51) Int Cl.:
**B60W 10/02** *(2006.01)*

(21) Anmeldenummer: **05015385.7**

(22) Anmeldetag: **15.07.2005**

(54) **Verfahren zum Schutz einer automatisiert betätigten Kupplung eines Fahrzeugs gegen Überlastung**

Method for protecting an automated vehicle clutch against overload

Méthode pour protéger un embrayage à commande automatique contre surcharge dans un véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2004  DE 102004037714**

(43) Veröffentlichungstag der Anmeldung:
**08.02.2006  Patentblatt 2006/06**

(73) Patentinhaber: **LuK Lamellen und Kupplungsbau Beteiligungs KG**
**77815 Bühl (DE)**

(72) Erfinder:
• **Reibold, Ekkehard, Dr.**
  **77933 Lahr (DE)**
• **Martin, Jens**
  **76547 Sinzheim-Kartung (DE)**
• **Metzger, Jörg, Dr.**
  **77830 Bühlertal (DE)**

(56) Entgegenhaltungen:
**DE-A1- 19 815 259          US-A1- 2003 022 759**

EP 1 623 901 B1

## Beschreibung

Die vorliegende Erfindung betrifft ein Verfahren zur Vorausbestimmung einer Überlastung einer automatisiert betätigten Kupplung eines Fahrzeugs während einer Schlupfphase und zum Vermeiden der Überlastung nach dem Oberbegriff des Anspruchs 1. Die Erfindung betrifft darüber hinaus eine Vorrichtung zur Durchführung des Verfahrens nach dem Oberbegriff des Anspruchs 11.

Bei einer im Triebstrang eines Fahrzeugs angeordneten Reibungskupplung wird beim Anfahren und Schalten in die Kupplung Reibleistung und Reibenergie eingebracht. Die Reibleistung führt zu einem Temperaturgradienten in der Kupplung, während die Reibenergie zu einem Anstieg der mittleren Kupplungstemperatur führt.

In der US 2003/022759 A1 wird ein Verfahren und eine Vorrichtung zur Steuerung eines automatisierten Anfahrelements eines Kraftfahrzeugs in Abhängigkeit der thermischen Belastung des Anfahrelements offenbart.

Bei einer derartigen automatisierten Kupplung ergibt sich das bei einer vorgegebenen Position der Betätigungseinrichtung in Form beispielsweise eines Aktuators betätigten Kupplung übertragbare Kupplungsmoment anhand der Kupplungsmomentenkennlinie. Über eine Adaption der Kupplungsmomentenkennlinie auf der Basis der Kupplungstemperatur bzw. der in die Kupplung eingetragenen Reibenergie kann einer temperaturbedingten Veränderung des Übertragungsverhaltens der Kupplung Rechnung getragen werden.

Wenn die Kupplung aber aufgrund einer kurzfristigen deutlichen Überlastung der Gefahr einer thermisch-mechanischen Verformung des Kupplungsaggregats und des Fadings des Reibbelags ausgesetzt wird, dann können solche kritischen Situationen zu einer deutlichen Veränderung des Übertragungsverhaltens der Kupplung führen, der durch eine Adaption der Kupplungsmomentenkennlinie nicht mehr Rechnung getragen werden kann.

Die Adaption der Kupplungsmomentenkennlinie findet nämlich auf der Basis bereits abgeschlossener Veränderungen des Übertragungsverhaltens der Kupplung statt und kann somit der Gefahr einer sich abzeichnenden thermisch-mechanischen Verformung des Kupplungsaggregats und der Gefahr eines einsetzenden Fadings der Reibbeläge nicht Rechnung tragen.

Ausgehend hiervon liegt der vorliegenden Erfindung nunmehr die Aufgabe zugrunde, ein Verfahren zur Vorausbestimmung einer Überlastung einer automatisiert betätigten Kupplung eines Fahrzeugs zu schaffen und damit die Möglichkeit der frühzeitigen Einleitung von Abhilfemaßnahmen zu bieten. Auch soll eine Vorrichtung zur Durchführung des Verfahrens geschaffen werden.

Die vorliegende Erfindung schafft nunmehr zur Lösung dieser Aufgabe hinsichtlich des Verfahrens ein Verfahren zur Vorausbestimmung einer Überlastung einer automatisiert betätigten Kupplung eines Fahrzeugs während einer Schlupfphase und zum Vermeiden der Überlastung, wobei nach dem Verfahren die während einer vorbestimmten ersten Zeitdauer der Schlupfphase in die Kupplung eingetragene Energie bestimmt wird und/oder die aktuelle Temperatur der Kupplung erfasst wird und anhand der zu erwartenden zweiten Zeitdauer der Schlupfphase der zu erwartende Energieeintrag in die Kupplung und/oder die zu erwartende Kupplungstemperatur bestimmt wird und in Abhängigkeit von dem zu erwartenden Energieeintrag und/oder der zu erwartenden Kupplungstemperatur Maßnahmen zum Vermeiden der Überlastung ergriffen werden.

Damit schafft die vorliegende Erfindung ein Verfahren, mit dem die Gefahr einer Überlastung einer derartigen automatisiert betätigten Kupplung erkannt wird und dann auf der Basis der erkannten Gefahr einer Überlastung rechtzeitig Maßnahmen eingeleitet werden, die die erkannte Überlastung vermeiden. Zu diesem Zweck ist es nach der vorliegenden Erfindung vorgesehen, dass die Schlupfphase der Kupplung, die Zeitdauer also, während der sich die Kupplung im Schlupfbetrieb bei einem Anfahrvorgang oder einem Gangwechselvorgang des der Kupplung zugeordneten Getriebes befindet, mindestens in zwei Zeitabschnitte unterteilt wird, wobei die während der ersten vorbestimmten Zeitdauer der Schlupfphase in die Kupplung eingetragene Energiebetrag bestimmt wird und auf der Basis des während der zweiten zu erwartenden Zeitdauer der Schlupfphase erwarteten Reibenergieeintrags in die Kupplung Maßnahmen zum Vermeiden einer sich abzeichnenden Überlastung der Kupplung ergriffen werden.

Da die hier zu ergreifenden Maßnahmen zum Vermeiden der Überlastung der Kupplung in ihrer Wertigkeit abgestimmt werden können auf die Wertigkeit der Gefahr einer Überlastung der Kupplung, ist es nach der Erfindung vorgesehen, dass die Maßnahmen zum Vermeiden der Überlastung in Abhängigkeit des zu erwartenden Energieeintrags und/oder der zu erwartenden Kupplungstemperatur ausgewählt werden. So können nach der Erfindung beispielsweise mehr oder weniger komfortmindernde Maßnahmen zum Vermeiden der Überlastung der Kupplung ergriffen werden, wobei in diesem Zusammenhang lediglich als Beispiel als vom Fahrer nicht komfortmindernd erfasste Maßnahme die Erhöhung der Überanpressung der Kupplung genannt werden kann und bei einer größeren Gefahr der Überlastung der Kupplung auf der Basis eines größeren zu erwartenden Reibenergieeintrags in die Kupplung eine komfortmindernde Maßnahme getroffen werden kann, indem einerseits die Kupplung schneller geschlossen wird und andererseits zusätzlich das vom Motor abgegebene Motormoment mittels eines Eingriffs in die Motorsteuerung verringert wird.

Neben der Auswahl der Maßnahmen zum Vermeiden der Überlastung der Kupplung in Abhängigkeit von dem zu erwartenden Energieeintrag und/oder der zu erwartenden Kupplungstemperatur ist es nach der Erfindung auch vorgesehen, diese Maßnahmen in Abhängigkeit der ersten Zeitdauer der Schlupfphase und/oder der zu erwartenden zweiten Zeitdauer der Schlupfphase auszuwählen. So kann beispielsweise bei einem vorbestimmten Motormoment eine maximal zulässige Schlupfzeitdauer bestimmt werden, da anderenfalls der Reibenergieeintrag in die Kupplung einen vorbestimmten Schwellenwert überschreitet. Wenn sich nun während einer ersten Schlupfzeitdauer der Reibenergieeintrag in die Kupplung bereits dem maximal zulässigen Reibenergieeintrag nähert, die Schlupfdrehzahl, das heißt also die Differenzdrehzahl zwischen der Kupplungseingangs- und der Kupplungsausgangsseite noch so groß ist, dass die bis zum Abbau der Schlupfdrehzahl erwartete zweite Zeitdauer der Schlupfphase, die zu der ersten bereits abgelaufenen Zeitdauer der Schlupfphase hinzu kommt, größer wird als die maximal zulässige Schlupfzeitdauer, dann kann auf die Gefahr einer Überlastung der Kupplung geschlossen werden und es können entsprechende Maßnahmen zum Vermeiden der Überlastung der Kupplung ergriffen werden, beispielsweise die Kupplung zur Abkürzung der erwarteten zweiten Schlupfzeitdauer schneller geschlossen werden.

Da die Dauer der Schlupfphase auch von dem im Triebstrang vorliegenden Übersetzungsverhältnis und der Fahrzeuggeschwindigkeit abhängt, wobei dies im Wesentlichen auf die während eines Gangwechselvorgangs vorliegende Schlupfphase zutrifft, ist es erfindungsgemäss vorgesehen, die Maßnahmen zum Vermeiden der Überlastung der Kupplung in Abhängigkeit des aktuellen Gangs eines Getriebes im Triebstrang des Fahrzeugs und/oder der Geschwindigkeit des Fahrzeugs auszuwählen.

Wie es vorstehend bereits erwähnt wurde, wird beim Anfahren und Schalten in die Kupplung Reibleistung eingebracht. Diese Reibleistung führt dabei zu einem Temperaturgradienten in der Kupplung. Eine hohe aktuelle Reibleistung kann daher in kurzer Zeit zu einer thermischmechanischen Verformung des Kupplungsaggregats und zu einer negativen Veränderung der Reibkoeffizienten der Reibbeläge der Kupplung führen, so dass es nach der Erfindung auch vorgesehen ist, dass die Maßnahmen der Vermeiden der Überlastung der Kupplung ausgewählt werden in Abhängigkeit der aktuellen Reibleistung der Kupplung und/oder des Gradienten der aktuellen Schlupfdrehzahl der Kupplung. Damit gehen in die Auswahl der Maßnahmen zum Vermeiden der Überlastung der Kupplung auch sehr kurzfristig zum Tragen kommende Überwachungsparameter oder Auswahlparameter ein.

Nach der Erfindung wird auch eine Unterscheidung getroffen bezüglich der zu ergreifenden Maßnahmen zum Vermeiden der Überlastung der Kupplung in Abhängigkeit von der Wertigkeit oder der Stufigkeit der Gefahr einer Überlastung der Kupplung. Wenn nun beispielsweise auf der Basis des während der zweiten Zeitdauer der Schlupfphase erwarteten Energieeintrags in die Kupplung festgestellt wird, dass der während der gesamten Schlupfphase in die Kupplung eingetragene Reibenergiebetrag in der Kupplung zu einer erwarteten Kupplungstemperatur von beispielsweise 140 Grad Celsius führt, und anhand von Erfahrungswerten bekannt ist, dass eine deutliche Veränderung des Übertragungsverhaltens der Kupplung bei einem Temperaturwert von 140 Grad Celsius einsetzt und diese Veränderung des Übertragungsverhaltens der Kupplung vermieden werden soll, so kann nach dieser Feststellung die Kupplung schneller geschlossen werden, um die Zeitdauer des Reibenergieeintrags in die Kupplung zu verringern. Wenn auf der Basis des erwarteten Reibenergieeintrags während der erwarteten zweiten Zeitdauer der Schlupfphase festgestellt wird, dass die unveränderte Aufrechterhaltung der Schlupfbedingung während der zweiten Schlupfzeitdauer zu einer erwarteten Kupplungstemperatur von beispielsweise 250 Grad Celsius führt, dann kann als Maßnahme zum Vermeiden der Überlastung der Kupplung neben dem schnelleren Schließen der Kupplung auch noch ein Eingriff in die Motorsteuerung zur Verringerung des vom Motor abger gebenen Abtriebsmoments durchgeführt werden.

Damit ist es nach der Erfindung auch vorgesehen, die Maßnahmen zum Vermeiden der Überlastung der Kupplung anhand von Schwellenwerten der Auswahlparameter oder Überwachungsparameter durchzuführen.

Nach einer Weiterbildung der Erfindung können auch Bereiche zwischen Schwellenwerten gebildet werden, innerhalb deren auswählbare Maßnahmen zum Vermeiden einer Überlastung der Kupplung derart klassifiziert werden, dass in Abhängigkeit der Schwellenwertbereiche der Auswahlparameter die Maßnahmen ausgewählt werden. Es können damit nach der vorliegenden Erfindung Schwellenwertbereiche der Auswahlparameter oder Überwachungsparameter definiert werden, so dass dann, wenn die erwarteten Energieeintragswerte oder beispielsweise Schlupfzeitdauerwerte innerhalb eines ersten Schwellenwertbereichs liegen, eine erste Maßnahmengruppe zum Vermeiden der Überlastung der Kupplung ausgewählt wird, die beispielsweise weniger komfortmindernd vom Fahrer festgestellt wird. Sollten aber die erwarteten Werte innerhalb eines anderen Schwellenwertbereichs liegen, so würde ein tatsächliches Erreichen der höheren Schwellenwertbereiche durch die Auswahlparameter oder Überwachungsparameter eine größere Gefahr der Überlastung der Kupplung beinhalten, so dass nach der Erfindung in diesem Fall dann stärker komfortmindernde Maßnahmen zum Vermeiden der Überlastung der Kupplung ergriffen werden, wie beispielsweise eine deutliche Verringerung des vom Motor abgegebenen Abtriebsmoments.

Nach einer Weiterbildung der Erfindung ist es auch vorgesehen, dass die zweite Zeitdauer der Schlupfphase anhand der abzubauenden Schlupfdrehzahl bestimmt wird. Es bedeutet dies mit anderen Worten, dass es während der ersten Zeitdauer der Schlupfphase bereits zu einer Verringerung der Schlupfdrehzahl der Kupplung gekommen ist und zwar während der dann bekannten ersten Zeitdauer der Schlupfphase, so dass auf der Basis der am Ende der ersten Zeitdauer der Schlupfphase noch vorliegenden Schlupfdrehzahl die Länge der zweiten Zeitdauer der Schlupfphase bestimmt werden kann, an deren Ende die Schlupfdrehzahl weitgehend Null geworden ist, so dass also weitgehend Drehzahlgleichheit besteht zwischen der Motorabtriebswelle und der Getriebeeingangswelle.

Ganz allgemein ist es nach einer Weiterbildung vorgesehen, dass mittels der Maßnahmen zum Vermeiden der Überlastung der Kupplung der Gradient der Verringerung der Schlupfdrehzahl erhöht wird, so dass also Maßnahmen getroffen werden, die die gesamte Schlupfzeitdauer der Kupplung verringern, um damit den Eintrag der Reibenergie während der Schlupfzeitdauer der Kupplung zu verringern.

Zu diesem Zweck kann nach der vorliegenden Erfindung der Grad der Überanpressung der Kupplung erhöht werden und/oder die Kupplung geschlossen werden und/oder das von der Kupplung zu übertragende Motormoment verringert werden.

Vorstehend wurden Überwachungsparameter bzw. Auswahlparameter genannt, anhand deren Schwellenwerte dieser Parameter bestimmt werden können, anhand deren dann wiederum unterschiedliche Maßnahmen zum Vermeiden der Überlastung der Kupplung ausgewählt und durchgeführt werden können. Nach der Erfindung ist es auch vorgesehen, dass für die unterschiedlichen zu Schlupfphasen führenden Vorgänge des Anfahrens und des Gangwechsels bzw. der Schaltung getrennt unterschiedliche Schwellenwerte der Auswahlparameter oder Überwachungsparameter herangezogen werden können. So ist es beispielsweise auch möglich, verschiedene Kombinationen der Auswahlparameter oder Überwachungsparameter zu bilden, anhand deren dann die unterschiedlichen Maßnahmen zum Vermeiden der Überlastung der Kupplung ergriffen werden.

Als Beispiel hierfür kann genannt werden, dass jeweils für Anfahrten und Schaltungen getrennt in Abhängigkeit der Kupplungstemperatur, der aktuellen Gangstufe und der aktuellen Fahrzeuggeschwindigkeit und der eingebrachten Reibenergie, der bisherigen Dauer der Schlupfphase während des aktuellen Anfahrvorgangs bzw. des aktuellen Schaltvorgangs Schwellenwerte für die jeweils genannten Auswahlparameter bzw. Überwachungsparameter definiert werden, die dann zu Schwellenwertbereichen zusammengefasst werden, innerhalb deren dann auswählbare Maßnahmen zum Vermeiden einer Überlastung der Kupplung ausgewählt werden.

Die zum Zeitpunkt der Feststellung der jeweils aktuellen Werte der Auswahlparameter bzw. Überwachungsparameter aktuelle Reibleistung und der aktuelle Gradient der Schlupfdrehzahl kann nun derart ausgewertet werden, dass die aktuelle Reibleistung und der aktuelle Gradient zu einer Auswahl einer Maßnahme zur Vermeidung der Überlastung der Kupplung führt, die mehr komfortmindernde Maßnahmen beinhalten, nämlich beispielsweise eine Verringerung des Motormoments. Damit kann einer aufgrund der aktuellen Reibleistung bzw. des aktuellen Gradienten der Schlupfdrehzahl höheren Gefahr einer Überlastung der automatisiert betätigten Kupplung Rechnung getragen werden.

In Abhängigkeit der so festgestellten Gefahr einer Überlastung der Kupplung können nun nach der Erfindung unterschiedliche Maßnahmen zum Vermeiden der Überlastung ergriffen werden. So ist es beispielsweise möglich, die Kupplung zuzuziehen, d.h. also zu schließen, wobei je nach dem Schwellenwertsbereich die Kupplung mit unterschiedlichen Geschwindigkeiten geschlossen werden kann, also mit unterschiedlichen Gradienten der Verringerung der Schlupfdrehzahl. Auch ist es möglich, in Abhängigkeit der Schwellenwerte bzw. der Schwellenwertsbereiche die Überanpressung an der Kupplung zu erhöhen und das Motormoment durch einen Motoreingriff zu verringern, was beispielsweise dann geschehen kann, wenn nach dem erfindungsgemäßen Verfahren festgestellt worden ist, dass etwa der zu erwartende Energieeintrag zu einem Fading der Reibbeläge der Kupplung führen würde, so dass auch die vollständig geschlossene Kupplung das aktuelle Motormoment nicht mehr übertragen kann.

Die Erfindung schafft nun auch eine Vorrichtung zur Durchführung des Verfahrens, wobei die Vorrichtung einen Aktuator besitzt zur Betätigung einer Kupplung im Triebstrang eines Fahrzeugs und eine Steuereinrichtung zur Steuerung des Aktuators, wobei die Steuereinrichtung zur Bestimmung der in die Kupplung während einer Schlupfphase eingetragenen Reibenergie und zur Auswahl von Maßnahmen zum Vermeiden einer Überlastung der Kupplung aus einer Vielzahl derartiger Maßnahmen ausgebildet ist und den Aktuator entsprechend der ausgewählten Maßnahmen ansteuert.

Damit schafft die Erfindung auch eine Vorrichtung, mit der in Abhängigkeit von der Gefahr der Überlastung der automatisiert betätigten Reibungskupplung unterschiedliche Maßnahmen zum Vermeiden der Überlastung ergriffen werden und zwar zu einem Zeitpunkt, bevor eine derartige Überlastungssituation tatsächlich entstehen kann.

Die Erfindung wird nun nachfolgend noch anhand eines Ausführungsbeispiels näher erläutert.

Es wird von der Situation eines Anfahrvorgangs eines Fahrzeugs mit einem Anhänger an einem Berg ausgegangen. Die Anfahrt wird unter Volllast durchgeführt, also mit vollständig betätigtem Fahrpedal. Nach einer ersten Zeitdauer der Schlupfphase während des Anfahrvorgangs von 3 Sekunden beträgt die aktuelle Reibleistung 9.5 kW, während die bisher eingebrachte Reibenergie 37 kJ beträgt. Aufgrund der nach 3 Sekunden des Anfahrvorgangs noch vorhandenen Schlupfdrehzahl kann nun festgestellt werden, dass die zu erwartende zweite Zeitdauer der Schlupfphase weitere 9 Sekunden beträgt, so dass die gesamte Schlupfphase etwa 12 Sekunden beträgt. Während der zweiten Zeitdauer der Schlupfphase wird auf der Basis dieser Erkenntnis ein zu erwartender Reibenergieeintrag als Integral der Reibleistung bestimmt zu 74 kJ. Die aktuelle Reibleistung ergibt sich dabei nach folgender Beziehung:

**Reibleistung (Watt) = 2 \* Pi / 60 \* Schlupfdrehzahl (U/min) \* Kupplungsmoment (Nm),**

also aus dem Produkt des Kupplungsmoments und der Schlupfdrehzahl.

Da der somit vorausbestimmte erwartete Reibenergieeintrag auf der Basis der aktuellen Kupplungstemperatur zu unterschiedlichen erwarteten Kupplungstemperaturen führt, werden die mit dem somit bestimmten erwarteten Reibenergieeintrag erwarteten Temperaturen als unterschiedlich kritisch eingestuft, infolge dessen unterschiedliche Maßnahmen zum Vermeiden der Überlastung der Kupplung ergriffen werden.

Die nachfolgende Tabelle

| zu erwartende Reibenergie | Kupplungstemperatur | | | |
|---|---|---|---|---|
| | niedrig (< 100 °C) | mittel (100 - 200 °C) | hoch (200 - 300 °C) | sehr hoch (> 300°C) |
| 50 kJ | unkritisch | unkritisch | kritisch 1 | kritisch 2 |
| 100 kJ | kritisch 1 | kritisch 1 | kritisch 2 | kritisch 3 |
| 150 kJ | kritisch 2 | kritisch 2 | kritisch 3 | kritisch 3 |

zeigt nun, dass anhand der aktuellen Kupplungstemperatur und der zu erwartenden Reibenergie unterschiedliche Schwellenwertbereiche (in diesem Fall der erwarteten Kupplungstemperatur) bestimmt werden, so dass dann, wenn die erwartete Kupplungstemperatur in Abhängigkeit vom erwarteten Reibenergieeintrag in unterschiedlichen Schwellenwertbereichen liegt, unterschiedliche Maßnahmen zum Vermeiden einer Überlastung der Kupplung ausgewählt werden.

Wenn nun beispielsweise die aktuelle Kupplungstemperatur weniger als 100 Grad Celsius beträgt, und der zu erwartende Reibenergieeintrag den Wert von 50 kJ annimmt, so wird diese Situation als "unkritisch" eingestuft, so dass keine Gegenmaßnahmen zum Vermeiden der Überlastung der Kupplung ergriffen werden, da diese Situation für die Kupplung unkritisch ist. Liegt aber die aktuelle Kupplungstemperatur - beispielsweise aufgrund bereits mehrerer derartiger Anfahrvorgänge - im Bereich von 200 - 300 Grad Celsius und der zu erwartende Reibenergieeintrag wieder bei 50 kJ, so ist diese Situation als "kritisch 1" eingestuft, und es sind der Situation "kritisch 1" entsprechende Maßnahmen zum Vermeiden der Überlastung der Kupplung zu ergreifen, beispielsweise ein deutlich schnelleres Zuziehen der Kupplung, um die zweite Zeitdauer der Schlupfphase abzukürzen, so dass aufgrund des Integrals über der Zeit der tatsächliche Energieeintrag in die Kupplung deutlich kleiner wird als der erwartete Reibenergieeintrag.

Liegt nun die aktuelle Kupplungstemperatur im Bereich von beispielsweise 100 - 200 Grad Celsius und wird von einem erwarteten Reibenergieeintrag von 150 kJ ausgegangen, so führt dies zu einer noch kritischeren Situation, die mit "kritisch 2" bezeichnet wird und damit zusätzlich zu der ergriffenen Maßnahme zur Vermeidung der Überlastung der Kupplung in der Form des schnelleren Zuziehens der Kupplung noch das Motormoment verringert wird. Entsprechend kann nach dem erfindungsgemäßen Verfahren zur Vorausbestimmung einer Überlastung der automatisiert betätigten Kupplung auch eine als "kritisch 3" bewertete Situation entstehen, wenn nämlich die aktuelle Kupplungstemperatur beispielsweise mehr als 200 Grad Celsius beträgt und aufgrund des erwarteten Reibenergieeintrags von 150 kJ bei derzeitigem Motormoment eine noch deutlich stärkere Verringerung des Motormoments als Maßnahme zum Vermeiden der Überlastung der Kupplung ergriffen wird.

Wenn bei der vorstehend geschilderten Anfahrsituation eines Fahrzeugs mit einem Anhänger an einem Berg nach dem Anfahren, das heißt dem Einsetzen der Fahrzeugbewegung in die gewünschte Richtung, der Schlupfdrehzahlgradient über einem vorbestimmten Schwellenwert liegt, das heißt also beispielsweise größer als Null ist und damit die Schlupfdrehzahl steigt, kann dies nach dem erfindungsgemäßen Verfahren erkannt werden und eine beispielsweise deutlich stärker komfortmindernde Maßnahme zum Vermeiden der Überlastung der Kupplung ausgewählt werden, also beispielsweise eine Maßnahme ergriffen werden, die statt aus der Kategorie "kritisch 1" nunmehr der Kategorie "kritisch 2" entspringt.

Damit schafft nun die Erfindung ein Verfahren zur Vorausbestimmung einer Überlastung einer automatisiert betätigten Kupplung eines Fahrzeugs und zum Vermeiden der Überlastung. In Abhängigkeit der Schwere der vorausbestimmten Überlastung, d.h. also des Grads der vorausbestimmten Überlastung werden nach der vorliegenden Erfindung unterschiedliche Maßnahmen zum Vermeiden der Überlastung ergriffen. Diese können beispielsweise in einer Erhöhung der Überanpressung an der Kupplung liegen, einem Verringern des Motormoments durch einen Motoreingriff, einem schnelleren Zuziehen der Kupplung oder einer Kombination der genannten oder anderer zusätzlicher Maßnahmen zum Schutz der Kupplung beim Anfahren und Schalten.

Hinsichtlich vorstehend im Einzelnen nicht näher erläuterter Merkmale der Erfindung wird im Übrigen ausdrücklich auf die Ansprüche verwiesen.

**Patentansprüche**

1. Verfahren zur Vorausbestimmung einer Überlastung einer automatisiert betätigten Kupplung eines Fahrzeugs während einer Schlupfphase und zum Vermeiden der Überlastung, wobei die während einer vorbestimmten ersten Zeitdauer der Schlupfphase in die Kupplung eingetragene Energie bestimmt wird und/oder die aktuelle Temperatur der Kupplung erfasst wird, **dadurch gekennzeichnet, dass** anhand der zu erwartenden zweiten Zeitdauer der Schlupfphase der zu erwartende Energieeintrag in die Kupplung und/oder die zu erwartende Kupplungstemperatur bestimmt wird und in Abhängigkeit von dem zu erwartenden Energieeintrag und/oder der zu erwartenden Kupplungstemperatur Maßnahmen zum Vermeiden der Überlastung ergriffen werden, wobei die Maßnahmen zum Vermeiden der Überlastung der Kupplung ausgewählt werden in Abhängigkeit des aktuellen Gangs eines Getriebes im Triebstrang des Fahrzeugs und/oder der Geschwindigkeit des Fahrzeugs.

2. Verfahren nach Anspruch 1, **dadurch, gekennzeichnet, dass** die Maßnahmen zum Vermeiden der Überlastung der Kupplung ausgewählt werden in Abhängigkeit des zu erwartenden Energieeintrags und/oder der zu erwartenden Kupplungstemperatur.

3. Verfahren nach Anspruch 1 oder 2, **dadurch gekennzeichnet, dass** die Maßnahmen zum Vermeiden der Überlastung der Kupplung ausgewählt werden in Abhängigkeit der ersten Zeitdauer der Schlupfphase und/oder der zu erwartenden zweiten Zeitdauer der Schlupfphase.

4. Verfahren nach einem der vorstehenden Ansprüche, **dadurch gekennzeichnet, dass** die Maßnahmen zum Vermeiden der Überlastung der Kupplung ausgewählt werden in Abhängigkeit der aktuellen Reibleistung der Kupplung und/oder des Gradienten der aktuellen Schlupfdrehzahl der Kupplung.

5. Verfahren nach einem der vorstehenden Ansprüche, **dadurch gekennzeichnet, dass** die Maßnahmen zum Vermeiden der Überlastung der Kupplung ausgewählt werden anhand von Schwellenwerten der Auswahlparameter.

6. Verfahren nach Anspruch 5, **dadurch gekennzeichnet, dass** Bereiche zwischen Schwellenwerten gebildet werden, innerhalb deren auswählbare Maßnahmen zum Vermeiden einer Überlastung der Kupplung klassifiziert werden derart, dass in Abhängigkeit der Schwellenwertsbereiche der Auswahlparameter die Maßnahmen ausgewählt werden.

7. Verfahren nach einem der vorstehenden Ansprüche, **dadurch gekennzeichnet, dass** die zweite Zeitdauer der Schlupfphase anhand der abzubauenden Schlupfdrehzahl bestimmt wird.

8. Verfahren nach einem der vorstehenden Ansprüche, **dadurch gekennzeichnet, dass** mittels der Maßnahmen zum Vermeiden der Überlastung der Kupplung der Gradient der Verringerung der Schlupfdrehzahl erhöht wird.

9. Verfahren nach Anspruch 8, **dadurch gekennzeichnet, dass** der Grad der Überanpressung der Kupplung erhöht wird und/oder die Kupplung geschlossen wird und/oder das von der Kupplung zu übertragende Motormoment verringert wird.

10. Vorrichtung zur Durchführung des Verfahrens nach einem der vorstehenden Ansprüche, mit einem Aktuator zur Betätigung einer Kupplung im Triebstrang eines Fahrzeugs und einer Steuereinrichtung zur Steuerung des Aktuators, **dadurch gekennzeichnet, dass** die Steuereinrichtung zur Bestimmung der in die Kupplung während einer Schlupfphase eingetragenen Reibenergie und zur Auswahl von Maßnahmen in Abhängigheit des aktuellen Gangs eines Getriebes in Triebstrang des Fahrzeugs und/oder der Geschwindigkeit des Fahrzeugs zum Vermeiden einer Überlastung der Kupplung ausgebildet ist und den Aktuator entsprechend der ausgewählten Maßnahmen ansteuert.

**Claims**

1. Method for predetermining an overload of an automatedly actuated clutch of a vehicle during a slip phase and to avoid the overload, the energy introduced into the clutch during a predetermined first time duration of the slip phase being determined and/or the current temperature of the clutch being detected, **characterized in that** the expected introduction of energy into the clutch and/or the expected clutch temperature are/is determined on the basis of the expected second time duration of the slip phase and measures for avoiding the overload are taken as a function of the expected introduction of energy and/or of the expected clutch temperature, the measures for avoiding the overload of the clutch being selected as a function of the current gear of a transmission in the drive train of the vehicle and/or of the speed of the vehicle.

2. Method according to Claim 1, **characterized in that** the measures for avoiding the overload of the clutch are selected as a function of the expected introduction of energy and/or of the expected clutch temperature.

3. Method according to Claim 1 or 2, **characterized in that** the measures for avoiding the overload of the clutch are selected as a function of the first time duration of the slip phase and/or of the expected second time duration of the slip phase.

4. Method according to one of the preceding claims, **characterized in that** the measures for avoiding the overload of the clutch are selected as a function of the current frictional power of the clutch and/or of the gradient of the current slip rotational speed of the clutch.

5. Method according to one of the preceding claims, **characterized in that** the measures for avoiding the overload of the clutch are selected on the basis of threshold values of the selection parameters.

6. Method according to Claim 5, **characterized in that** ranges between threshold values are formed, within which selectable measures for avoiding an overload of the clutch are classified in such a way that the measures are selected as a function of the threshold-value ranges of the selection parameters.

7. Method according to one of the preceding claims, **characterized in that** the second time duration of the slip phase is determined on the basis of the slip rotational speed to be reduced.

8. Method according to one of the preceding claims, **characterized in that** the gradient of the reduction in the slip rotational speed is increased by means of the measures for avoiding the overload of the clutch.

9. Method according to Claim 8, **characterized in that** the degree of overpressing of the clutch is increased and/or the clutch is closed and/or the engine torque to be transmitted by the clutch is reduced.

10. Device for carrying out the method according to one of the preceding claims, with an actuator for actuating a clutch in the drive train of a vehicle and with a control means for controlling the actuator, **characterized in that** the control means is designed for determining the frictional energy introduced into the clutch during a slip phase and for the selection of measures, as a function of the current gear of a transmission in the drive train of the vehicle and/or of the speed of the vehicle, for avoiding an overload of the clutch and activates the actuator according to the selected measures.

**Revendications**

1. Procédé pour anticiper une surcharge d'un accouplement à actionnement automatisé d'un véhicule pendant une phase de patinage et pour éviter la surcharge, l'énergie chargée dans l'accouplement pendant une première durée prédéfinie de la phase de patinage étant déterminée et/ou la température actuelle de l'accouplement étant mesurée, **caractérisé en ce que** la charge en énergie attendue dans l'accouplement et/ou la température attendue de l'accouplement est déterminée au moyen de la deuxième durée attendue de la phase de patinage et des mesures destinées à éviter la surcharge sont engagées en fonction de la charge en énergie attendue et/ou de la température attendue de l'accouplement, les mesures destinées à éviter la surcharge de l'accouplement étant choisies en fonction du rapport actuel d'une boîte de vitesses dans la chaîne motrice du véhicule et/ou de la vitesse du véhicule.

2. Procédé selon la revendication 1, **caractérisé en ce que** les mesures destinées à éviter la surcharge de l'accouplement sont choisies en fonction de la charge en énergie attendue et/ou de la température attendue de l'accouplement.

3. Procédé selon la revendication 1 ou 2, **caractérisé en ce que** les mesures destinées à éviter la surcharge de l'accouplement sont choisies en fonction de la première durée de la phase de patinage et/ou de la deuxième durée attendue de la phase de patinage.

4. Procédé selon l'une des revendications précédentes, **caractérisé en ce que** les mesures destinées à éviter la surcharge de l'accouplement sont choisies en fonction de la puissance de frottement actuelle de l'accouplement et/ou du gradient de la vitesse de rotation de patinage actuelle de l'accouplement.

5. Procédé selon l'une des revendications précédentes, **caractérisé en ce que** les mesures destinées à éviter la surcharge de l'accouplement sont choisies au moyen de valeurs de seuil des paramètres de sélection.

6. Procédé selon la revendication 5, **caractérisé en ce que** des plages sont définies entre ces valeurs de seuil, au sein desquelles les mesures qui peuvent être choisies pour éviter la surcharge de l'accouplement sont classifiées de telle sorte que les mesures sont choisies en fonction des plages de valeurs de seuil des paramètres de sélection.

7. Procédé selon l'une des revendications précédentes, **caractérisé en ce que** la deuxième durée de la phase de patinage est déterminée au moyen de la vitesse de rotation de patinage à réduire.

8. Procédé selon l'une des revendications précédentes, **caractérisé en ce que** le gradient de réduction de la vitesse de rotation de patinage est augmenté au moyen des mesures destinées à éviter la surcharge de l'accouplement.

9. Procédé selon la revendication 8, **caractérisé en ce que** le degré de surpression de contact de l'accouplement est augmenté et/ou l'accouplement est fermé et/ou le couple moteur à transmettre par l'accouplement est réduit.

10. Dispositif pour mettre en oeuvre le procédé selon l'une des revendications précédentes, comprenant un actionneur pour actionner un accouplement dans la chaîne motrice d'un véhicule et un dispositif de commande pour commander l'actionneur, **caractérisé en ce que** le dispositif de commande est conçu pour déterminer l'énergie de frottement chargée dans l'accouplement pendant une phase de patinage et pour sélectionner des mesures destinées à éviter une surcharge de l'accouplement en fonction du rapport actuel d'une boîte de vitesses dans la chaîne motrice du véhicule et/ou de la vitesse du véhicule et commande l'actionneur en fonction des mesures choisies.

**EP 1 623 901 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003022759 A1